# FASCICULE DE BREVET EUROPEEN

(11) **EP 0 975 485 B1**
(45) Date de publication et mention de la délivrance du brevet: **04.12.2002**
(21) Numéro de dépôt: 99904912.5
(22) Date de dépôt: 19.02.1999
(51) Int. Cl.: B60K 15/077

(54) **RESERVOIR A CARBURANT A PIEGE A CARBURANT INTEGRE**
KRAFSTOFFTANK MIT INTEGRIERTER ANSAUGSTELLE
FUEL TANK WITH INTEGRATED FUEL TRAP

(30) Priorité: 19.02.1998 FR 9802018
(43) Date de publication de la demande: 02.02.2000
(73) Titulaire: COMPAGNIE PLASTIC OMNIUM, 69007 Lyon (FR)
(72) Inventeur: ARNAL, André, F-38290 Frontonas (FR); DECOBERT, Philippe, F-60120 Paillart (FR); ROSSEEL, Alexis, F-60200 Compiègne (FR)
(74) Mandataire: Leszczynski, André
(86) Numéro de dépôt international: FR9900379
(87) Numéro de publication internationale: WO99042319

(56) Documents cités:
- EP-A- 0 619 174
- DE-A- 4 023 037
- FR-A- 2 646 813
- GB-A- 2 172 864

## Description

La présente invention concerne un réservoir à carburant comportant un piège à carburant intégré.

Pour aspirer le carburant depuis les réservoirs à carburant, on connaît les ensembles d'aspiration qui sont des blocs d'un seul tenant du type comprenant, de haut en bas : une platine de fixation qui, en étant assujettie à la paroi supérieure du réservoir à carburant, maintient l'ensemble d'aspiration en position d'utilisation et permet entre autres à différentes tubulures de faire circuler le carburant ; une pompe ; une portion de tuyau reliée à la pompe ; une crépine dont la fonction est de filtrer le carburant aspiré ; et un pied d'aspiration constitué par une cuvette dont la fonction est de piéger le carburant, le pied de l'ensemble d'aspiration prenant appui sur la paroi inférieure du réservoir à carburant.

Compte tenu de la structure d'un tel ensemble d'aspiration, on comprend que le positionnement du pied d'aspiration est imposé par l'emplacement de la platine de fixation sur la paroi supérieure du réservoir.

Or, en prévision d'éventuelles vérifications et opérations de maintenance du réservoir, le constructeur automobile prévoit une ouverture d'accès au réservoir, en général sous les sièges arrière du véhicule.

La platine de fixation de l'ensemble d'aspiration doit donc se trouver dans une région du réservoir coïncidant avec l'ouverture d'accès au réservoir prévue sur le véhicule.

De ce fait, si le point optimal d'aspiration, lequel est déterminé comme étant le point du réservoir le plus apte à baigner dans le carburant liquide pour toutes les conditions de roulage du véhicule, ne se trouve pas au droit de cette région du réservoir, c'est-à-dire à la verticale de celle-ci lorsque le réservoir est en position sur le véhicule, l'ensemble d'aspiration est mal positionné, eu égard au problème de l'aspiration du carburant, ce qui se produit finalement assez souvent.

Une telle configuration est présentée dans le document FR-A-2 646 813.

La présente invention vise à résoudre ce problème en proposant un réservoir à carburant dans lequel l'aspiration du carburant est assurée de manière efficace en toutes circonstances, c'est-à-dire même si la platine de fixation de l'ensemble d'aspiration ne peut pas être placée au droit du point optimal d'aspiration du réservoir.

La présente invention a pour objet une enveloppe de réservoir à carburant ayant une paroi de fond et comportant un piège à carburant réalisé d'un seul tenant avec sa paroi de fond, caractérisée par le fait que le piège à carburant comporte des moyens permettant la fixation d'une crépine directement sur ledit piège à carburant.

Dans un mode de réalisation préféré, l'enveloppe selon l'invention est réalisée en deux parties obtenues par moulage par injection et réunies par collage ou soudage.

Dans le but de mieux faire comprendre l'invention, on va en décrire maintenant des modes de réalisation donnés à titre d'exemples non limitatifs, en référence au dessin annexé dans lequel :
- la figure 1 est une vue en coupe d'un réservoir à carburant,
- la figure 2 est une vue de détail du piège à carburant de la figure 1,
- la figure 3 est une vue analogue à la figure 2 d'une variante du même piège à carburant, et
- la figure 4 est une vue analogue à la figure 3 représentant une autre variante de piège à carburant muni d'une crépine.

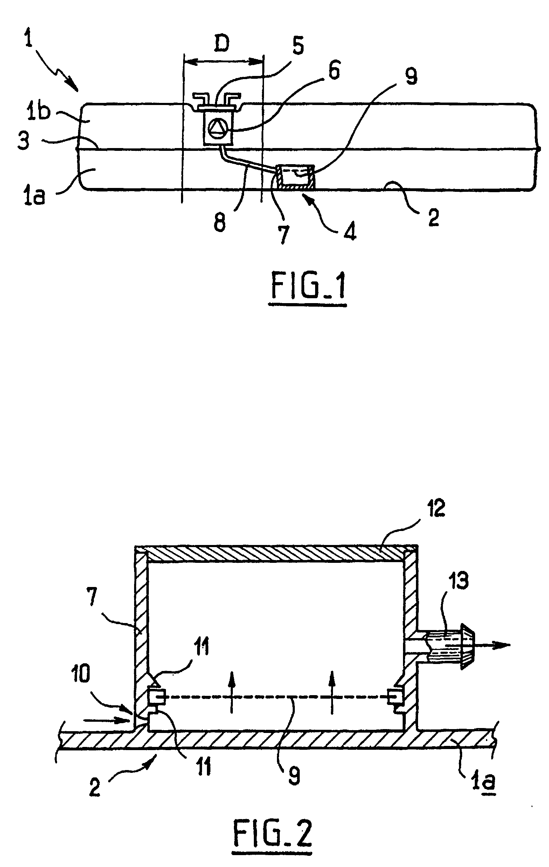

Le réservoir à carburant de la figure 1 comporte une enveloppe 1 constituée par une moitié inférieure 1a et par une moitié supérieure 1b réunies par soudage ou collage suivant un plan de soudure 3.

La moitié inférieure 1a ne comporte aucun point bas lorsque le réservoir est horizontal, comme représenté, mais au contraire un fond 2 plan et horizontal lorsque le réservoir est en position sur le véhicule.

De ce fait, le point d'aspiration optimal, 4, c'est-à-dire le point du réservoir le plus apte à baigner dans le carburant liquide pour toutes les conditions de roulage du véhicule, se situe sensiblement au centre du réservoir.

En raison de son emplacement dans le véhicule auquel il est destiné, le réservoir à carburant 1 ne dispose que d'un intervalle D, pour recevoir la platine 5 d'un ensemble d'aspiration 6 dépourvu de pied d'aspiration.

On voit que le point d'aspiration optimal 4 se trouve en dehors de cet intervalle D.

Un piège à carburant 7 est solidarisé à la paroi de fond de l'enveloppe, au-dessus du point d'aspiration optimal 4, en étant mécaniquement indépendant de l'ensemble d'aspiration 6.

Une portion de tube 8 reliée à l'ensemble d'aspiration 6 plonge dans le piège à carburant 7, lequel renferme une crépine 9.

Sur la figure 2, on voit que le piège à carburant 7 est issu de moulage avec la partie inférieure la de l'enveloppe. Il est donc réalisé d'un seul tenant avec elle.

Il comporte à sa base un orifice 10 d'introduction du carburant.

Cet orifice 10 peut, dans un mode de réalisation non représenté, mais que l'homme du métier saura réaliser sans difficulté, être combiné avec le circuit de retour de carburant afin de créer par effet Venturi un gavage ou suralimentation du piège à carburant 7, lequel contient ainsi en permanence une quantité de carburant suffisante pour assurer l'alimentation correcte du circuit de carburant du moteur.

A sa partie inférieure, la paroi intérieure du piège à carburant 7 est munie de moyens d'encliquetage 11 qui permettent la fixation de la crépine filtrante 9 s'étendant sur toute la section horizontale du piège à carburant 7 et filtrant le carburant provenant de l'orifice 10.

L'ouverture supérieure du piège à carburant 7 est obturée par un bouchon 12 de manière à empêcher que du carburant ne pénètre dans le piège à carburant autrement qu'à travers l'orifice 10 et la crépine 9.

Le piège à carburant est en outre muni d'un embout de raccordement 13 débouchant dans le piège à carburant au-dessus de la crépine 9.

Cet embout est prévu pour recevoir la portion de tube 8 de l'ensemble d'aspiration 6.

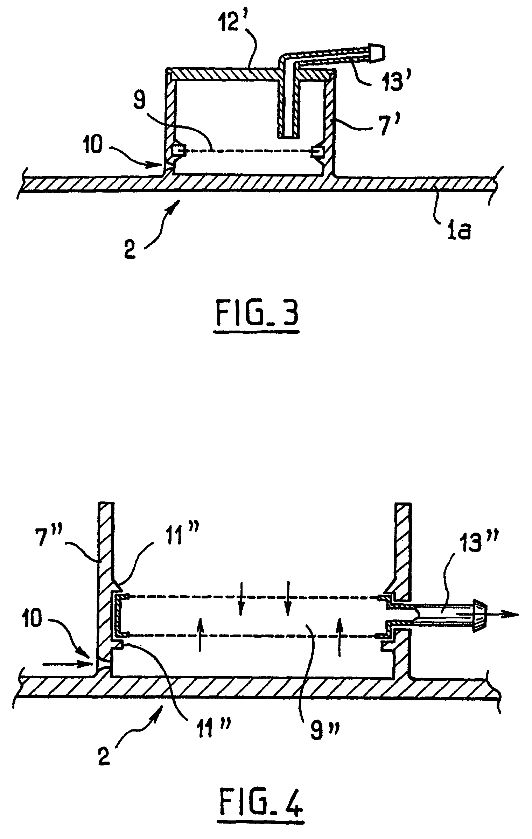

Dans la variante de la figure 3, l'embout de raccordement 13' est solidaire du bouchon 12', ce qui permet de simplifier le moule d'injection de la partie inférieure du réservoir, dont l'empreinte conforme le piège à carburant en même temps que la paroi de fond de l'enveloppe.

Les autres parties du piège à carburant sont identiques à celles de la figure 2 et portent les mêmes numéros de référence.

Dans la variante de la figure 4, le piège à carburant 7" est également issu de moulage avec la moitié inférieure la de l'enveloppe.

Dans cette variante, des moyens d'encliquetage 11" sont prévus dans le piège à carburant pour la fixation d'une crépine 9" en forme de poche qui est apte à filtrer aussi bien le carburant qui pénètre dans le piège à carburant par son ouverture supérieure que celui qui pénètre dans le piège à carburant par l'orifice 10.

Un embout de raccordement 13", solidaire de la crépine 15" est destiné à recevoir la portion de tuyau 8.

Il est bien entendu que les modes de réalisation qui viennent d'être décrits ne présentent aucun caractère limitatif et qu'ils pourront recevoir toutes modifications désirables sans sortir du cadre de l'invention.

En particulier, bien qu'on n'ait décrit qu'un embout mâle 13, 13',13" sur le piège à carburant, il est clair qu'un tel embout pourrait être une pièce femelle sans que cela ne modifie l'objet de l'invention.

## Revendications

1. Enveloppe de réservoir à carburant comportant un piège à carburant réalisé d'un seul tenant avec la paroi de fond de l'enveloppe, **caractérisée par le fait que** le piège à carburant (7, 7', 7") comporte des moyens (11, 11") permettant la fixation d'une crépine directement sur ledit piège à carburant.

2. Enveloppe selon la revendication 1, **caractérisée par le fait que** les moyens permettant la fixation de la crépine sont des moyens d'encliquetage (11, 11").

3. Enveloppe selon l'une quelconque des revendications 1 et 2, **caractérisée par le fait que** la crépine (9) s'étend sur toute la section horizontale du piège à carburant (7,7') lequel est obturé supérieurement (12,12') de sorte que le carburant ne peut pénétrer dans ledit piège à carburant que par un orifice (10) ménagé à la base du piège à carburant, un embout (13,13') étant prévu au-dessus de la crépine (9) pour aspirer le carburant.

4. Enveloppe selon l'une quelconque des revendications 1 et 2, **caractérisée par le fait que** la crépine (9") est en forme de poche et est fixée à l'intérieur du piège à carburant (7"), un embout (13") solidaire de la crépine étant prévu pour aspirer le carburant.

5. Enveloppe selon l'une quelconque des revendications 1 à 4, **caractérisée par le fait qu'**elle est réalisée en deux parties obtenues par moulage par injection d'une matière plastique et réunies par collage ou soudage.

## Patentansprüche

1. Behälter für die Aufnahme von Kraftstoff, der eine Ansaugstelle für Kraftstoff hat, welche einstückig mit der Wand des Bodens des Behälters hergestellt ist, **dadurch gekennzeichnet, dass** die Ansaugstelle (7,7'7") Mittel (11,11") aufweist, die eine Befestigung eines Saugkorbs direkt an der Ansaugstelle ermöglichen.

2. Behälter nach Anspruch 1, **dadurch gekennzeichnet, dass** die eine Befestigung des Saugkorbs ermöglichen dem Mittel als Einklipsmittel (11,11") ausgebildet sind.

3. Behälter nach einem beliebigen der Ansprüche 1 und 2, **dadurch gekennzeichnet, dass** der Saugkorb (9") sich über den gesamten horizontalen Querschnitt der Ansaugstelle (7, 7") für Kraftstoff erstreckt, welche nach oben so abgeschlossen (12, 12") ist, dass der Kraftstoff nur durch eine Öffnung (10"), die in der Basis der Ansaugstelle ausgebildet ist, in die Ansaugstelle hineingelangen kann, dabei ist ein Ansatz (13, 13') oberhalb des Saugkorbs (9") vorgesehen, um Kraftstoff anzusaugen.

4. Behälter nach einem beliebigen der Ansprüche 1 und 2, **dadurch gekennzeichnet, dass** der Saugkorb (9") die Form einer Tasche hat und im Inneren der Ansaugstelle (7') für Kraftstoff befestigt ist, dabei ist ein Ansatz (13"), der mit dem Saugkorb verbunden ist, zum Ansaugen von Kraftstoff vorgesehen.

5. Behälter nach einem beliebigen der Ansprüche 1 bis 4, **dadurch gekennzeichnet, dass** er aus zwei Teilstücken hergestellt ist die im Spritzgussverfahren aus einem Kunststoff hergestellt sind und durch Kleben oder Schweißen miteinander verbunden sind.

## Claims

1. Fuel tank casing comprising a fuel trap formed integrally with the end wall of the casing, **characterized in that** the fuel trap (7, 7' 7'') comprises means (11, 11'') allowing a suction strainer to be fixed directly to the said fuel trap.

2. Casing according to Claim 1, **characterized in that** the means allowing the fixing of the suction strainer are snap-fastening means (11, 11'').

3. Casing according to either one of Claims 1 and 2, **characterized in that** the suction strainer (9) extends over the entire horizontal cross section of the fuel trap (7, 7') which is closed off at the top (12, 12') so that fuel can enter the said fuel trap only through an orifice (10) formed at the base of the fuel trap, a nozzle (13, 13') being provided above the suction strainer (9) for drawing the fuel off.

4. Casing according to either one of Claims 1 and 2, **characterized in that** the suction strainer (9'') is in the form of a pocket and is fixed inside the fuel trap (7''), a nozzle (13'') secured to the suction strainer being provided for drawing the fuel off.

5. Casing according to any one of Claims 1 to 4, **characterized in that** it is produced in two parts obtained by injection-moulding of a plastic and joined together by bonding or welding.
